# EUROPEAN PATENT APPLICATION

(11) **EP 4 163 033 A1**
(43) Date of publication of application: **12.04.2023**
(21) Application number: 22197835.6
(22) Date of filing: 26.09.2022
(51) Int. Cl.: B22F 10/28, B22F 12/63, B33Y 10/00, B33Y 30/00, B33Y 40/00, B22F 12/57, B22F 12/00

(54) **ADDITIVE MANUFACTURING ELECTROSTATIC POWDER DEPOSITION**

(30) Priority: 05.10.2021 US 202117493983
(71) Applicant: Hamilton Sundstrand Corporation, Charlotte, NC 28217-4578 (US)
(72) Inventor: MARTIN, Thomas J., East Hartford, CT (US); STAROSELSKY, Alexander, Avon, CT (US); MIRONETS, Sergey, Charlotte, NC (US)
(74) Representative: Dehns

(57) **Abstract**

An additive material manufacturing, AMM, system is provided to deposit powder to a build. The AMM system includes a powder supply, and a delivery mechanism. The powder supply receives a first electrical charge having first polarity. The delivery mechanism receives a second electrical charge having second polarity opposite first polarity. The build receives a third electrical charge having the first polarity. The third electrical charge of the build is greater than the second electrical charge of the delivery mechanism. The delivery mechanism receives the electrically charged powder where it is retained thereto based on electrostatic attraction generated between the first polarity of the electrically charged powder and the second polarity of the delivery mechanism. The electrocharged powder is from the delivery mechanism to the build based on electrostatic attraction generated between the first polarity of the electrically charged powder and the second polarity of the build.

## Description

### BACKGROUND

Exemplary embodiments generally pertain to the art of additive manufacturing, and in particular, additive material manufacturing deposition.

Additive material manufacturing (AMM), also known as solid freeform (SFF) manufacturing, refers generally to a category of additive manufacturing (AM) that fabricates a finished part performing a layer-wise construction of a plurality of thin sheets of material. AMM, in particular, typically involves iteratively applying several layers of powder material to a working surface (also referred to as a "build piece" or simply a "build"), and then performing a sintering process, which can include one or a combination of sintering, curing, and/or melting each layer. The process is repeated to construct a near-net shape component which can then be finished into the final product.

### BRIEF DESCRIPTION

According to a non-limiting embodiment, an additive material manufacturing (AMM) system comprises a roller and a powder dispenser. The roller is configured to rotate about a center axis and includes a collecting surface coated with a photosensitive material configured to retain an electrical charge having a first polarity. The powder dispenser is disposed above the roller and is configured to deposit electrically charged powder having a second polarity to the collecting surface. The second polarity has an opposite with respect to the first polarity. The roller rotates adjacent to an electrically charged build having the second polarity such that an electrostatic attraction between the electrically charged powder and the electrically charged build forces the electrically charged powder to transfer from the collecting surface to the electrically charged build.

In addition to one or more of the features described above, or as an alternative to any of the foregoing embodiments, the photosensitive material comprises at least one of selenium, amorphous silicon and cadmium sulfide, and wherein the electrically charged powder includes at least one of a metal material, a ceramic material, and a polymer material.

In addition to one or more of the features described above, or as an alternative to any of the foregoing embodiments, AMM system the system further comprises a first power supply in signal communication with the roller and the powder dispenser, the first power supply configured to deliver a first voltage having the first polarity to the powder dispenser so as to induce the electrical charge on the powder, and to deliver a second voltage having the second polarity to the roller so as to induce the electrical charge on the collecting surface.

In addition to one or more of the features described above, or as an alternative to any of the foregoing embodiments, the powder is electrically charged as it is dispensed from the powder dispenser, and the dispensed electrically-charged powder is collected and retained on the collecting surface based on an electrostatic attraction between the first charge of the electrically charged powder and the second charge of the collecting surface.

In addition to one or more of the features described above, or as an alternative to any of the foregoing embodiments, the AMM system further comprises an energy delivery unit disposed adjacent the roller, the energy delivery unit configured to generate energy that is delivered to the collecting surface.

In addition to one or more of the features described above, or as an alternative to any of the foregoing embodiments, the energy impinges a targeted area of the collecting surface to remove the second charge at the targeted area and define a pattern of powder on the collecting surface, and the roller deposits the pattern of powder on to the electrically charged build as the roller rotates and locates the electrically charged powder in proximity of the electrically charged build.

In addition to one or more of the features described above, or as an alternative to any of the foregoing embodiments, the AMM system further comprises a computer system configured to store a computer model of the build, and configured to control the energy delivery unit so as to define the pattern of powder on the collecting surface.

In addition to one or more of the features described above, or as an alternative to any of the foregoing embodiments, the AMM system further comprises a heating unit configured to apply heat to the electrically charged build such that the heat sinters the powder to the build.

According to another non-limiting embodiment, an AMM system including a mechanical arm-based electrostatic powder deposition sub-system is provided. The mechanical arm-based electrostatic powder deposition sub-system comprises a mechanical arm configured to rotate and swing three-hundred and sixty degrees (360°) about a center axis or in full three-dimensional motion. The mechanical arm includes a first end coupled to a base and an opposing second end coupled to a rotatable joint. The base includes a collecting surface coated with an electrostatic or photosensitive material configured to retain an electrical charge having a first polarity. A powder dispenser is disposed above the mechanical arm and is configured to deposit electrically charged powder having a second polarity to the collecting surface. The second polarity is opposite with respect to the first polarity. The collecting surface is located proximate to an electrically charged build in response to rotating the mechanical arm. The electrically charged build has the second polarity such that an electrostatic attraction between the electrically charged powder and the electrically charged build forces the electrically charged powder to transfer from the collecting surface to the electrically charged build.

In addition to one or more of the features described above, or as an alternative to any of the foregoing embodiments, the photosensitive material comprises at least one of selenium, amorphous silicon and cadmium sulfide, and the electrically charged powder includes at least one of a metal material, a ceramic material, and a polymer material.

In addition to one or more of the features described above, or as an alternative to any of the foregoing embodiments, the AMM system further comprises a first power supply in signal communication with the mechanical arm and the powder dispenser. The first power supply is configured to deliver a first voltage having the first polarity to the powder dispenser so as to induce the electrical charge on the powder, and is configured to deliver a second voltage having the second polarity to the mechanical arm so as to induce the electrical charge on the collecting surface.

In addition to one or more of the features described above, or as an alternative to any of the foregoing embodiments, the powder is electrically charged as it is dispensed from the powder dispenser, and wherein the dispensed electrically powder is collected and retained on the collecting surface based on an electrostatic attraction between the first charge of the electrically charged powder and the second charge of the collecting surface.

In addition to one or more of the features described above, or as an alternative to any of the foregoing embodiments, the AMM system further comprises an energy delivery unit disposed adjacent the mechanical arm, the energy delivery unit configured to generate energy that is delivered to the collecting surface. The energy impinges a targeted area of the collecting surface to remove the second charge at the targeted area and define a pattern of powder on the collecting surface, and the collecting surface deposits the pattern of powder on to the electrically charged build as the mechanical arm moves and locates the electrically charged powder in proximity of the electrically charged build.

In addition to one or more of the features described above, or as an alternative to any of the foregoing embodiments, the AMM system further comprises a computer system configured to store a computer model of the build, and configured to control the energy delivery unit so as to define the pattern of powder on the collecting surface.

In addition to one or more of the features described above, or as an alternative to any of the foregoing embodiments, the AMM system further comprises a heating unit configured to apply heat to the electrically charged build such that the heat sinters the powder to the build.

According to another non-limiting embodiment, an additive material manufacturing (AMM) system comprising a stamp-based electrostatic powder deposition sub-system. The stamp-based electrostatic powder deposition sub-system comprises a stamping press, a powder dispenser, and a powder tray. The stamping press includes an arm having an end coupled to a base. The base includes a collecting surface coated with an electrostatic or photosensitive material configured to retain a first electrical charge. The powder dispenser is configured to dispense powder. The configured to collect dispensed powder and apply a second electrical charge to the powder collected in the powder tray. The stamping press is configured to press the base against the electrically charged powder collected in the powder tray such that the collecting surface retains a portion of the electrically charged powder based on an electrostatic attraction between the electrically charged powder and the collecting surface. The stamping press is further configured to press the base against an electrically charged build such that the electrically charged powder is transferred from the collecting surface to the build based on an electrostatic attraction between the electrically charged powder and a third electrical charge applied to the build.

In addition to one or more of the features described above, or as an alternative to any of the foregoing embodiments, the first electrical charge applied to the powder has a first polarity, the second electrical charge applied to the stamping press has a second polarity opposite the first polarity, and the third electrical charge applied to the build has the first charge, the third electrical charge having a voltage level that is greater than a voltage level of the first electrical charge.

In addition to one or more of the features described above, or as an alternative to any of the foregoing embodiments, the AMM system further comprises a first power supply in signal communication with the powder tray and the stamping press. The first power supply is configured to deliver a first voltage having the first polarity to the powder tray so as to induce the first electrical charge on the powder, and to deliver a second voltage having the second polarity to the stamping press so as to induce the electrical charge on the collecting surface.

In addition to one or more of the features described above, or as an alternative to any of the foregoing embodiments, the AMM system further comprises an energy delivery unit configured to generate energy that is delivered to the collecting surface. The energy impinges a targeted area of the collecting surface to remove the second charge at the targeted area and define a pattern of powder on the collecting surface. The collecting surface deposits the pattern of powder on to the electrically charged build in response to pressing the contact surface against the electrically charged build.

In addition to one or more of the features described above, or as an alternative to any of the foregoing embodiments, the AMM system further comprises a computer system configured to store a computer model of the build, and configured to control the energy delivery unit so as to define the pattern of powder on the collecting surface.

In addition to one or more of the features described above, or as an alternative to any of the foregoing embodiments, the AMM system further comprises a heating unit configured to apply heat to the electrically charged build, wherein the heat sinters the powder to the build.

### BRIEF DESCRIPTION OF THE DRAWINGS

The following descriptions should not be considered limiting in any way. With reference to the accompanying drawings, like elements are numbered alike:
FIGS. 1 and 2 depict a block diagram of an AMM system according to a non-limiting embodiment;
FIGS. 3 and 4 depict a block diagram of an AMM system according to another non-limiting embodiment;
FIGS. 5-11 depict a block diagram of an AMM system according to yet another non-limiting embodiment; and
FIG. 12 is a flow diagram depicting a method of performing an AMM electrostatic powder deposition process according to a non-limiting embodiment.

### DETAILED DESCRIPTION

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

As described above, known AMM processes typically involve iteratively applying several layers of powder material to a working surface, referred to herein as a "build." Accordingly, AM processes utilize support structures to support power deposition systems that deposit the powder to the build before it is sintered, melted and fused thereto. Conventional supports, however, are known to cause inefficient power consumption, wasted energy, need for subtractive machining and excessive manual post-processing. The minimization of needed support structures is often the primary reason for determining the build direction, which can lead to added complexities, increased surface roughness, increased residual stresses and distortion of the build. Furthermore, it can be difficult or even impossible to remove support structures within internal cavities, which severely limits or even negates the geometric freedom and intended benefits of AM, especially for aircraft engine components.

In addition, uniform powder and packing density are important to ensure target dimensions, weights and/or profiles are met. However, conventional powder delivery systems typically deliver an excess amount of powder to the build, causing the formation of a non-uniform layer. As a result, additional processing steps are necessary to remove the excess powder and planarize the layer of power before sintering step can be performed. Furthermore, conventional powder bed delivery systems are too restrictive to, very inefficient for, or are not adaptable to, the AM building of composites (for example, using two or more different powder materials together in one build), or for varying or grading the powder attributes to control or optimize certain properties of the build (for example, varying the powder particle size to variably graded microstructure).

Various non-limiting embodiments solve the short-comings of known AMM powder deposition techniques by providing an AMM system capable of improving the efficiency and precision at which AMM powder is deposited to a build. The AMM system includes an electrostatic powder deposition sub-system and a sintering sub-system. The electrostatic powder deposition sub-system facilitates the purposeful application of static electricity to the AM powder supply and to the AM build. At the electrostatic powder deposition sub-system, the powder is electrified with the opposite charge of the build. For example, a negative charge is applied to the powder, while a positive charge is applied to the build. In this manner, an electrical charge attraction can be utilized to overcome the force of gravity and avoid the need for support structures. The electrical charge difference between the powder and build can also be utilized to deliver a precise amount of the powder to targeted areas of the build, thereby improving the packing density of the powder as it adheres to the build.

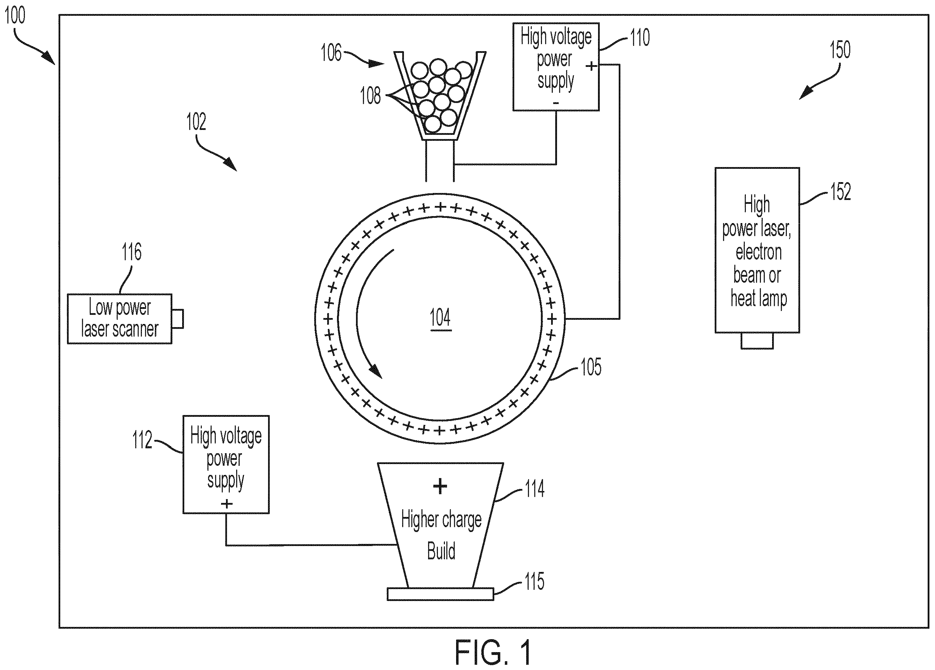

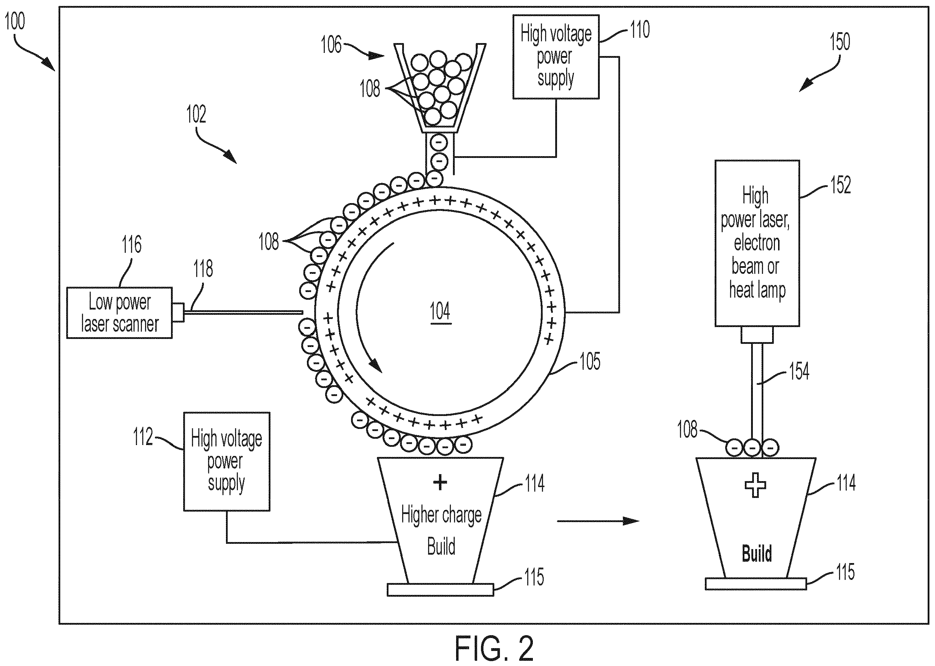

With reference now to FIGS. 1 and 2, an additive material manufacturing (AMM) system 100 is illustrated according to a non-limiting embodiment of the present disclosure. The AMM system 100 includes a roller-based electrostatic powder deposition sub-system 102 and a sintering sub-system 150. The roller-based electrostatic powder deposition sub-system 102 includes a delivery mechanism 104, a powder dispenser 106, a first power supply 110, a second power supply 112, and an energy delivery unit 116.

The delivery mechanism 104 serves to deliver powder to a build as described herein. The delivery mechanism 104 can include a roller 104 or drum 104, for example, and can have a cylindrical profile and is configured to rotate about a center axis. The roller 104 or drum 104 can be formed from an electrically conductive material and has a collecting surface 105 coated with an electrostatic or photosensitive material configured to retain an electrical charge. For example, the surface 105 can be coated with a photosensitive material including, but not limited to, selenium, amorphous silicon and cadmium sulfide. In one or more non-limiting embodiments, the photosensitive material can be used to control the application or removal of the powder to the roller or drum. According to one or more non-limiting embodiments of the invention, the powder is to be attracted and held to the surface of the roller or drum by static electricity in locations where the photosensitive material has been removed. At the beginning of each build step, the roller or drum surface is fully coated with photosensitive material, which is subsequently removed from the surface by a scanning laser or a pattern of light that illuminates the surface in the reverse image of next layer of the build. Next, the roller or drum is coated with the powder and sticks only to the surface areas without the photosensitive material. The result is such that the powder stays on the roller or drum surface with a 2-dimensional pattern where the powder is to be applied to the build. As the roller or drum moves over the build surface a layer of powder is transferred to the build in the desired pattern without waste. This processed as described may be reversed, in that a material is deposited onto and removed from the roller or drum surface as a positive image of the next build layer so that the deposited material attracts powder to drum or roller surface in the pattern to be transferred to the build. Although the aforementioned process is described in terms of a roller or drum, the process can be applied to various other embodiments of the invention including, for example, mechanical arm or a stamping press as described herein.

The powder dispenser 106 is disposed above the roller 104 or drum 104. The powder dispenser 106 can include a hopper configured to store powder 108 and an outlet configured to deposit the powder 108 to the roller 104 or drum 104. The powder 108 can include, but is not limited to, a metal material, a ceramic material, a polymer material, and combinations thereof. In one or more non-limiting embodiments, the powder dispenser 106 is configured to move in any direction with respect to the roller 104 or drum 104.

The first power supply 110 is in signal communication with the roller 104 or drum 104 and the powder dispenser 106. The first power supply 110 can be constructed in various manners including, but not limited to, one or more corona wires, a spark gap, and an electrophoretic charged powder splitter. The first power supply 110 is configured to deliver a first voltage having a negative polarity to the powder dispenser 106 and to apply a second voltage having a positive polarity to the roller 104 or drum 104. Accordingly, the first voltage induces a negative electrical charge (-) upon the powder 108 and the second voltage induces a positive electrical charge (+) upon the surface 105 of the roller 104 or drum 104. It should be appreciated that other non-limiting embodiments may apply a positive voltage to the powder dispenser 106/powder 108 and a negative voltage to the roller 104 or drum 104 without departing from the scope of the invention. For example, any opposing polarity between the powder and the drum that induces an attractive force between them can be implemented. This implementation can be accomplished with physical mechanisms other than electrostatic attraction, for example, magnetic forces or hydrophobic/hydrophilic forces. As shown in FIG. 2, for instance, the second voltage is applied to the outlet of the powder dispenser 106 such that the powder 108 is electrically charged as it is dispensed. Accordingly, the powder dispenser 106 delivers the electrically charged powder 108 to the roller 104 or drum 104. As a result, the electrically charged powder 108 is collected and retained on the surface 105 due to the electrostatic attraction between the negative charge of the powder 108 and the positive charge of the surface 105.

The second power supply 112 is configured to apply a third voltage to a build 114 that is configured to receive the electrically charged powder 108. In this example, the third voltage has a positive polarity with a voltage level that is greater than the voltage level of the second voltage applied to the roller 104 or drum 104. It should be appreciated, however, that the third voltage can have a negative polarity when used with a negatively charged roller 104 or drum 104 and a positively charged powder 108.

Referring to FIG. 2, the roller 104 or drum 104 is configured to deliver the collected electrically charged powder 108 from the surface 105 to the build 114. As described above, the third voltage has a positive polarity with a voltage level that is greater than the voltage level the voltage applied to the roller 104 or drum 104. As the roller 104 or drum 104 rotates, the negatively charged powder 108 collected on the surface 105 passes near the electrically charged build. Accordingly, the electrostatic attraction between the build 114 and the negatively charged powder 108 causes the powder 108 to transfer from the surface 105 to the build 114.

The energy delivery unit 116 is disposed adjacent the roller 104 or drum 104 and is configured to generate energy 118 that is delivered to the surface 105 (see FIG. 2). The energy delivery unit 116 can include, but is not limited to, a semiconductor laser or a light emitting diode (LED). The semiconductor laser can include, for example, an aluminum gallium arsenide (AlGaAs) laser. Similarly, the light emitting diode (LED) can generate light that is directed on the surface 105, e.g., using one or more reflecting surfaces. In either case, the energy beam or light 118 impinges a targeted area 107 of the surface 105, thereby selectively removing or neutralizing the charge at the targeted area 107 such that the powder falls off the drum, or selectively reverses the charge leaving a static electric negative image on the surface 105 that repels the negatively charged powder 108 from the roller 104 or drum 104. The powder selectively removed from the drum could be collected for re-use (not shown in figure). In one or more non-limiting embodiments, the energy delivery unit 116 is configured to move in any direction with respect to the roller 104 or drum 104. In this manner, the energy beam or light 118 can be directed to targeted areas 107 of the surface 105 to selectively remove powder where it is not to be applied to the build.

The sintering sub-system 150 includes a heating unit 152. The heating unit 152 is configured to apply heat 154 to the build 114. The heating unit 152 can include, but is not limited to, a high-power laser configured to generate a high-energy laser beam 154 that is directed to the build 114, an electron beam unit configured to generate an electron beam 154 that is generated to the build 114, or a heat lamp that is configured to generate high-temperature heat 154 that is delivered to the build 114. As mentioned above, the build 114 receives the electrically charged powder 114 from the roller 104 or drum 104. For example, the powder 108 is applied uniformly over the collecting surface 105, and the energy delivery unit 116 is used to selectively remove portions of the powder 108 from the collecting surface 105 to form a pattern of the negative image of where the next layer of powder 108 will be delivered to the build 114, i.e., where the pattern of negatively charged powder 108 is attracted to the positively charged build 114 so as to selectively deliver the layer of powder 108 to the build 114.

The build 114 with the deposited layer of powder 108 is then located in heating proximity of the heating unit 152 (see FIG. 2). In one or more non-limiting embodiments, the build 114 can be supported by a stage 115, which can be moved (either manually or mechanically) with respect to the sintering sub-system 150 so that the build 114 can be located within proximity of the heating unit 152. Accordingly, the layer of powder 108 is selectively melted by the heating unit 152 to melt or sinter the powder 108 to the build 114.

According to a non-limiting embodiment, the powder 108 is applied uniformly over the collecting surface 105, while the energy delivery unit 116 is deactivated. However, the uniform negatively charged powder layer can still be selectively delivered to the positively charged build 114 using the heating unit 152. For example, the heating unit 152 can include a laser that selectively directs energy to the layer of powder 108 delivered to the build 114. The portion of the powder 108 that receives the energy is melted to the build 114.

In one or more non-limiting embodiments, the AMM system 100 includes a computer system configured to control the electrostatic powder deposition sub-system 102 and/or the sintering sub-system 150. The computer system can store a computer model of the build 114, which can be used to determine the targeted areas 107 at which to remove or neutralize the electrical charge of the surface 105 and/or the targeted layers of powder 108 deposited on the build 114 to be selectively melted. The computer system is also configured to process a stream of rasterized data that controls the energy delivery unit 116. For example, the computer system can process the rasterized data so as to control the position of the energy delivery unit 116 and selectively activate and deactivate the energy beam 118.

In some non-limiting embodiments, the energy delivery unit 116 can be used to define an electrostatic image on the collecting surface 105 where the powder 108 is to be collected and delivered to the build 114 on a layer-by-layer basis. For example, the energy delivery unit 116 removes positive charge from the surface 105 at one or more targeted areas 107. The remaining powder 108 retained on the collecting surface defines a precise pattern or "image" that is then delivered to the build 114. In this manner, the AMM system 100 can deliver the powder 108 very accurately to the build 114 according to the image of where the powder 108 is targeted to be applied to the build 114 while significantly reducing the amount of wasted powder, or even eliminating wasted powder all together.

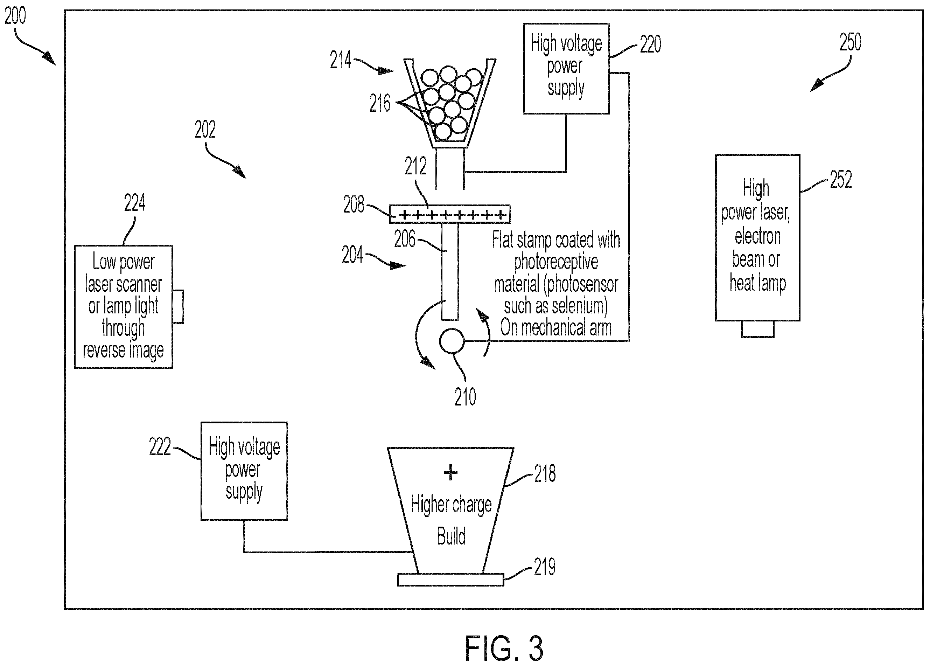

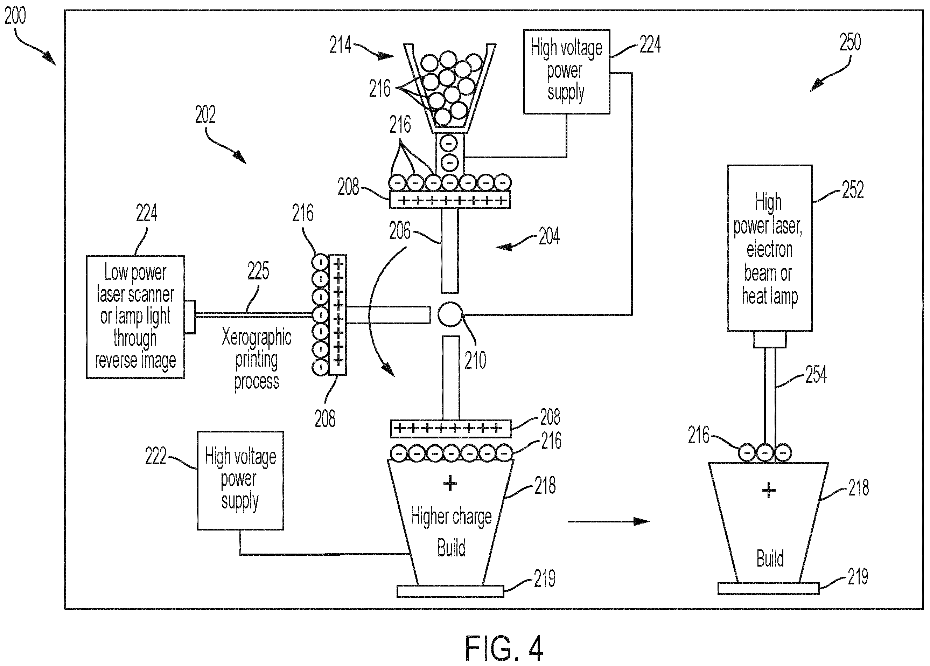

Turning to FIGS. 3 and 4, an AMM system 200 is illustrated according to another non-limiting embodiment of the present disclosure. The AMM system 200 includes a mechanical arm-based electrostatic powder deposition sub-system 202 and a sintering sub-system 250. The mechanical arm-based electrostatic powder deposition sub-system 202 includes a mechanical arm 204, a powder dispenser 214, a first power supply 220, a second power supply 222, and an energy delivery unit 224.

The mechanical arm 204 serves as a delivery mechanism for delivering powder 216 to a build 218 as described herein. The mechanical arm 204 is configured to rotate and swing three-hundred and sixty degrees (360°) about a center axis or in full three-dimensional motion. The mechanical arm 204 includes a length 206 having a first end coupled to a base 208 and an opposing second end coupled to a rotatable joint. The rotatable joint can include, for example, a shaft joint, ball and socket joint, universal joint, or two-dimensional rotating arm with sliding shaft. The shaft 210 can be coupled to a motor to facilitate two-dimensional or three-dimensional rotation, thereby rotating the arm 204. The base 208 includes a collecting surface 212 coated with an electrostatic or photosensitive material configured to retain an electrical charge having a first polarity.

The powder dispenser 214 is disposed above the mechanical arm 204 and is configured to deposit electrically charged powder 216 having a second polarity to the collecting surface 212. The second polarity of the powder 216 is opposite with respect to the first polarity of the collecting surface 212.

The first power supply 220 is in signal communication with the mechanical arm 204 and the powder dispenser 214. The first power supply 220 can be constructed in various manners including, but not limited to, one or more corona wires, a spark gap, and an electrophoretic charged powder splitter. The first power supply 220 is configured to deliver a first voltage having a negative polarity to the powder dispenser 214 and to apply a second voltage having a positive polarity to the mechanical arm 204. Accordingly, the first voltage induces a negative electrical charge (-) upon the powder 216 and the second voltage induces a positive electrical charge (+) upon the collecting surface 212 of the mechanical arm 204. It should be appreciated that other non-limiting embodiments may apply a positive voltage to the powder dispenser 214/powder 216 and a negative voltage to the mechanical arm 204 without departing from the scope of the invention.

As shown in FIG. 4, for example, the second voltage is applied to the outlet of the powder dispenser 214 such that the powder 216 is electrically charged as it is dispensed. Accordingly, the powder dispenser 214 delivers the electrically charged powder 216 to the mechanical arm 204. As a result, the electrically charged powder 216 is collected and retained on the collecting surface 212 due to the electrostatic attraction between the negative charge of the powder 216 and the positive charge of the collecting surface 212.

The second power supply 222 is configured to apply a third voltage to a build 218, which is configured to receive the electrically charged powder 216. In this example, the third voltage has a positive polarity with a voltage level that is greater than the voltage level of the second voltage applied to the mechanical arm 204. It should be appreciated, however, that the third voltage will have a negative polarity when used with a negatively charged mechanical arm 204.

The energy delivery unit 224 is disposed adjacent the mechanical arm 204 and is configured to generate energy 225 that is delivered to the collecting surface 212 as the mechanical arm rotates (see FIG. 4) and the collecting surface 212 faces the energy unit 224. As described herein, the energy delivery unit 224 can include, but is not limited to, a semiconductor laser or a light emitting diode (LED). The semiconductor laser can include, for example, an aluminum gallium arsenide (AlGaAs) laser. Similarly, LED can generate light that is directed on the collecting surface 212, e.g., using one or mirrors. In either case, the energy beam or light 225 impinges a targeted area of the collecting surface 212, thereby removing or neutralizing the charge at the targeted area, or even reverses the charge, leaving a static electric negative image on the collecting surface 212 that repels the negatively charged powder 216. In one or more non-limiting embodiments, the energy delivery unit 224 is configured to move in any direction with respect to the mechanical arm 204. In this manner, the energy beam or light 225 can be directed to one or more targeted areas of the collecting surface 212.

Still referring to FIG. 4, the mechanical arm 204 is configured to deliver the collected electrically charged powder 216 from the collecting surface 212 to the build 218. As described above, the third voltage has a positive polarity with a voltage level that is greater than the voltage level the voltage applied to the mechanical arm 204. As the mechanical arm 204 rotates and translates if needed, the base 208 will be positioned such that the collecting surface 212 faces the outlet of the powder dispenser 214. Accordingly, the deposited negatively charged powder 216 is collected on the collecting surface 212 and retained due to the electrostatic attraction as described herein.

As the mechanical arm 204 continues to rotate and translate if needed, the collecting surface 212 will face the energy delivery unit 224, which can direct energy thereto and define a pattern of powder 216 or "image" on the collecting surface 212. As the mechanical arm 204 continues its motion, the collecting surface 212 faces the electrically charged build 218. Accordingly, the electrostatic attraction between the build 218 and the negatively charged powder 216 causes the powder 216 to transfer from the collecting surface 212 to the build 218.

As described herein, the AMM system 200 can employ a computer system configured to control the mechanical arm-based electrostatic powder deposition sub-system 202 and/or the sintering sub-system 250. The computer system can store a computer model of the build 218, which can be used to determine the targeted at which to remove or neutralize the electrical charge of the collecting surface 212. The computer system is also configured to process a stream of rasterized data that controls the energy delivery unit 224. For example, the computer system can process the rasterized data so as to control the position of the energy delivery unit 224 and selectively activate and deactivate the energy 225. Accordingly, the energy delivery unit 224 can be used to define an electrostatic image on the collecting surface 212 where the powder 216 is to be collected and delivered to the build 218 on a layer-by-layer basis.

The sintering sub-system 250 includes a heating unit 252. As described herein, the heating unit 252 is configured to apply heat 254 to the build 218 to melt or sinter the powder 216 to the build 218. As described above, the build 218 can be supported by a stage 219, which can be moved (either manually or mechanically) with respect to the sintering sub-system 250 so that the build 218 can be located within proximity of the heating unit 252.

As described above, some non-limiting embodiments can employ a universal joint. In these arrangements, the three-dimensional (3D) motion of the delivery mechanism facilitated by the universal joint allows for application of the powder 216 from a collecting surface that is smaller than the build 218. In some non-limiting embodiments, the image of the powder layer is divided into sections. Each section can then be picked up by the delivery mechanism (e.g., roller, drum, mechanical arm, or stamp), moved in 3D motion to the build 218 and applied thereto. This process can be repeated over multiple iterations to apply each section several times, before the powder layer is melted by the heating unit 252.

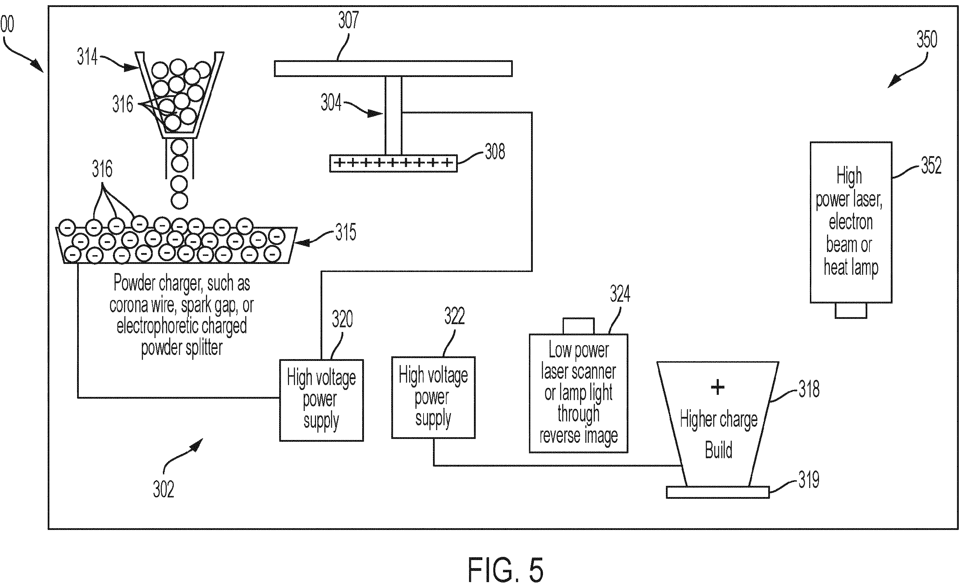

Referring now to FIGS. 5-11, an AMM system 300 is illustrated according to another non-limiting embodiment of the present disclosure. The AMM system 300 includes a stamp-based electrostatic powder deposition sub-system 302 and a sintering sub-system 304. The stamp-based electrostatic powder deposition sub-system 302 can operate as a printing-press mechanism, which uses electrostatic powder deposition to hold powder 316 patterned as an image to be built (as opposed to a raised surface of the image to be printed).

As shown in FIG. 5, the AMM system 300 includes the stamp-based electrostatic powder deposition sub-system 302 and a sintering sub-system 350. The stamp-based electrostatic powder deposition sub-system 302 includes a stamping press 304, a powder dispenser 314, a powder tray 315, a first power supply 320, a second power supply 322, and an energy delivery unit 324.

The stamping press 304 serves as a delivery mechanism for delivering powder 316 to a build 318 as described herein. The stamping press 304 includes an arm 306 and a base 308. The arm can travel along a track 307 and/or be adjusted with 360-degree movement via a universal joint. In additional, the arm 306 can be adjusted vertically (e.g., up and down) with respect to the track 307 so as to lower and raise the base 308. The base 308 includes a collecting surface 312 coated with an electrostatic or photosensitive material configured to retain an electrical charge having a first polarity.

The powder dispenser 314 is configured to deposit powder 316 to the powder tray 315. The powder tray 315 electrically charged by a voltage provided by the first power supply 320. The charge of powder tray 315 has a second polarity that is opposite with respect to the first polarity of the collecting surface 312.

The second power supply 322 is configured to apply a third voltage to a build 318. In this example, the third voltage has a positive polarity with a voltage level that is greater than the voltage level of the second voltage applied to the stamping press 304. It should be appreciated, however, that the third voltage will have a negative polarity when used with a negatively charged stamping press 304.

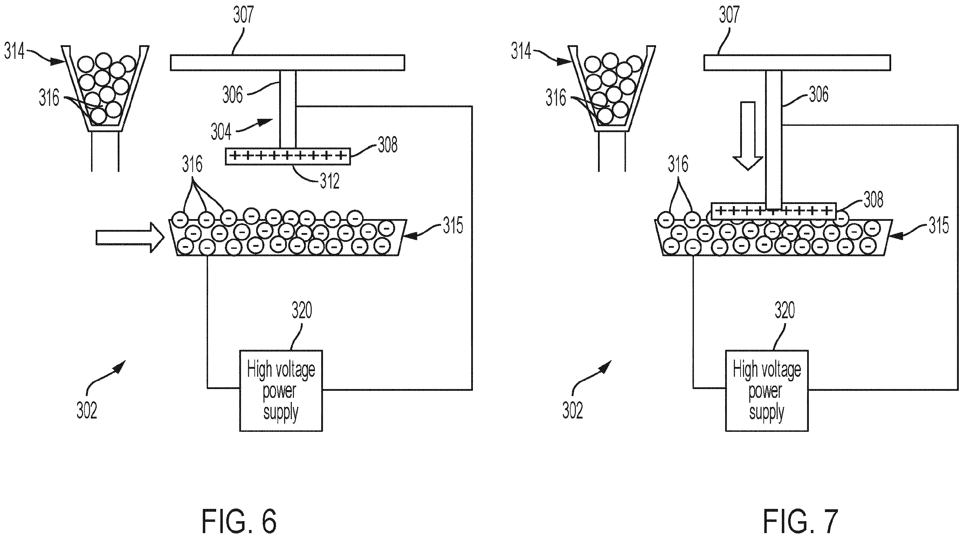

Turning to FIG. 6, the electrical connections applied to the stamping press 304 and the powder tray 315 are illustrated in greater detail. The first power supply 320 is in signal communication with the stamping press 304 and the powder tray 315. The first power supply 320 is configured to deliver a first voltage having a negative polarity to the powder tray 315 and to apply a second voltage having a positive polarity to the stamping press 304. Accordingly, the first voltage induces a negative electrical charge (-) upon the powder tray 315 and the second voltage induces a positive electrical charge (+) upon the collecting surface 312 of the stamping press. It should be appreciated that other non-limiting embodiments may apply a positive voltage to the powder tray 315 and a negative voltage to the stamping press 304 without departing from the scope of the invention.

As shown in FIG. 6, the second voltage is applied to the powder tray 315 such that powder 316 delivered from the powder dispenser 314 is electrically charged upon contacting the powder tray 315. Once there is a supply of electrically charged powder 316 collected in the powder tray 315, the stamping press 304 can be moved and positioned above the tray 315.

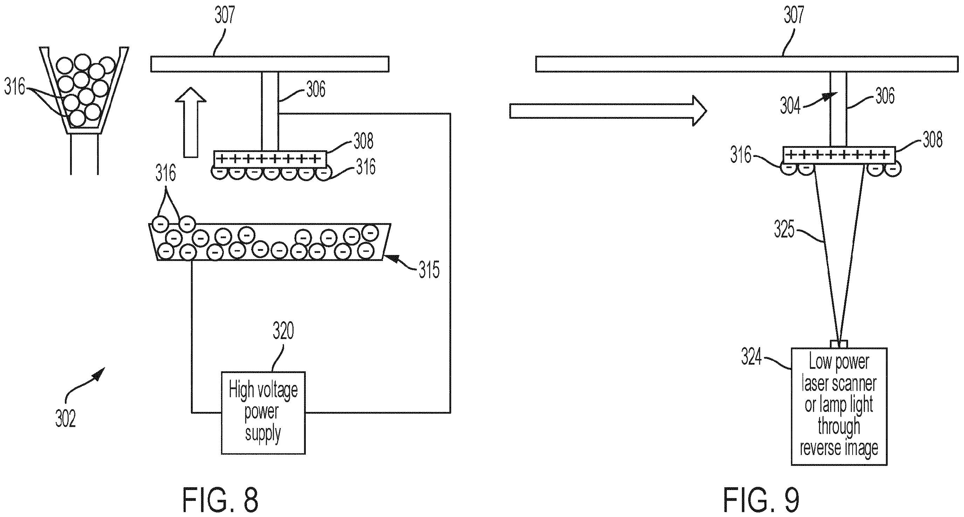

Referring now to FIGS. 7 and 8, the arm 306 of the stamping press 304 can be lowered such that the base 308 contacts the electrically charged powder 316 (see FIG. 7). Accordingly, the electrically charged powder 316 is collected and is retained on the collecting surface 312 after the base 308 is raised due to the electrostatic attraction between the negative charge of the powder 316 and the positive charge of the collecting surface 312 (see FIG. 8).

Turning now to FIG. 9, the energy delivery unit 324 is configured to generate energy 325 that is delivered to the collecting surface 312 when the stamping press 304 is moved such that the collecting surface 312 faces the energy unit 324 (see FIG. 9). As described herein, the energy delivery unit 324 can include, but is not limited to, a semiconductor laser or a light emitting diode (LED). The semiconductor laser can include, for example, an aluminum gallium arsenide (AlGaAs) laser. Similarly, the LED can generate light that is directed on the collecting surface 312. In either case, the energy beam or light 325 impinges a targeted area of the collecting surface 312, thereby removing or neutralizing the charge at the targeted area, or even reverses the charge, leaving a static electric negative image on the collecting surface 312 that repels the negatively charged powder 316. In one or more non-limiting embodiments, the energy delivery unit 324 is configured to move in any direction with respect to the stamping press 304. In this manner, the energy beam or light 225 can be directed to one or more targeted areas of the collecting surface 312.

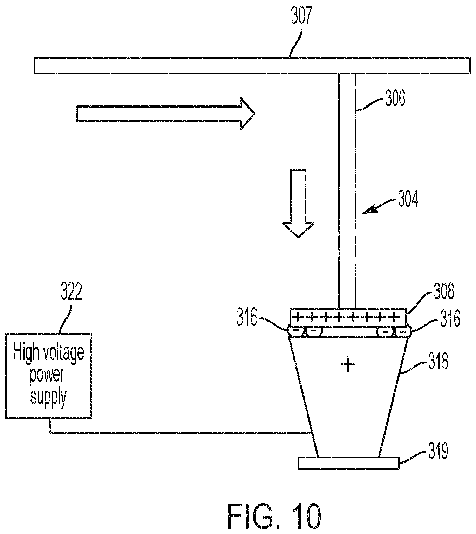

Referring to FIG. 10, the stamping press 304 is shown moved and positioned over the electrically charged build 318. Once in position, the base 308 is lowered to make contact with the build 318. As described above, the third voltage of the build 318 has a positive polarity with a voltage level that is greater than the voltage level the voltage applied to the stamping press 304. Accordingly, the negatively charged powder 316 is transferred to the build 318 and retained thereto.

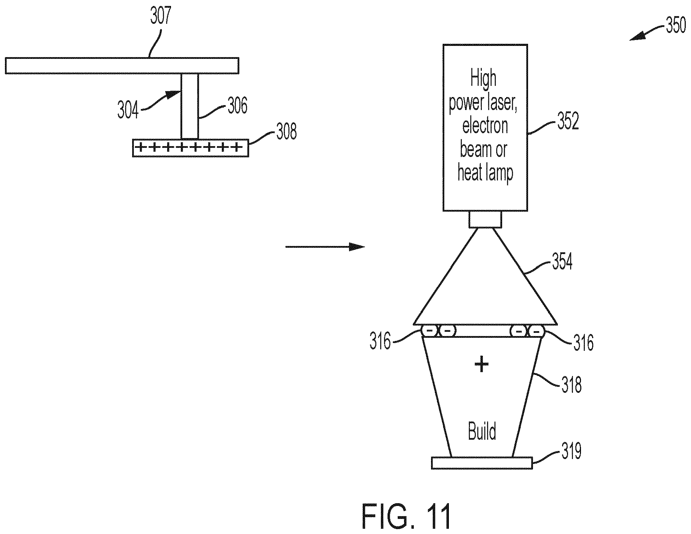

Turning now to FIG. 11, the build 318 containing the patterned layer of powder 316 is moved to the sintering sub-system 350 and positioned beneath the heating unit 352. As described herein, the heating unit 352 is configured to apply heat 354 to the build 318 to melt or sinter the powder 316 to the build 318. As described above, the build 318 can be supported by a stage 319, which can be moved (either manually or mechanically) with respect to the sintering sub-system 350 so that the build 318 can be located within proximity of the heating unit 352.

In any of the embodiments described with reference to FIGS. 1-11, any unused powder that remains on the delivery mechanism (e.g., the roller, drum, mechanical arm or stamp) can be removed after each step of the AM layer-by-layer process is completed. In one or more non-limiting embodiments, the cleaning and removal can be achieved by a brush, a blower and/or by reversing the polarity of the delivery mechanism collecting surface to repel the charged powder. In this manner, the collecting surface is cleaned and ready to use for the next step or to apply the next layer of powder.

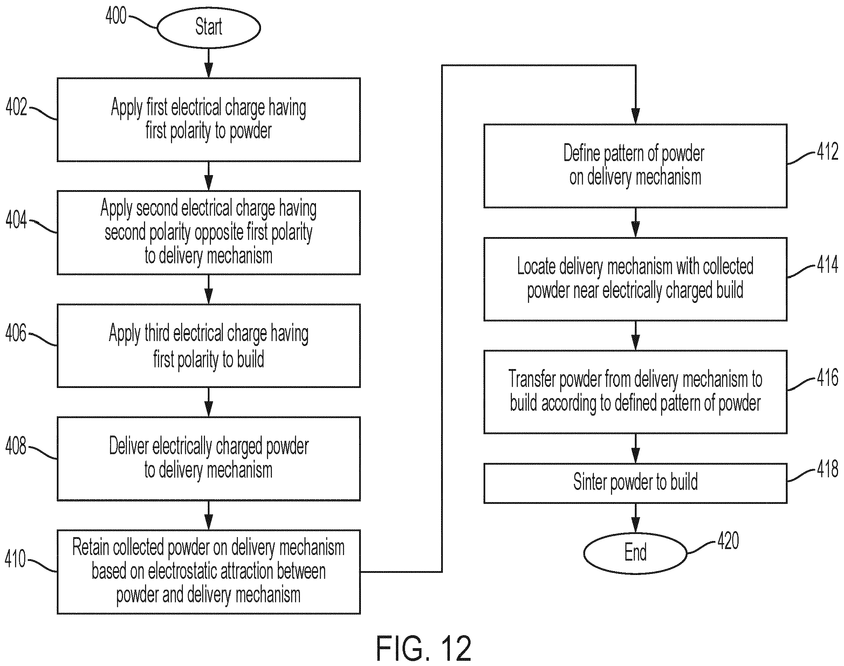

Turning to FIG. 12, a method of performing an AMM electrostatic powder deposition process is illustrated according to a non-limiting embodiment. The method begins at operation 400, and at operation 402 a first electrical charge having first polarity is applied to powder, which is to be deposited on a build. At operation 404, a second electrical charge having second polarity opposite first polarity is applied to a delivery mechanism, which is configured to deliver the powder to the build. The delivery mechanism can include, for example, an electrically conductive drum that includes a drum surface configured to collect powder, an electrically conductive mechanical arm including a collecting surface configured to collect powder, or a stamping press including a collecting surface configured to collect powder. At operation 406, a third electrical charge having the first polarity is applied to the build. At operation 408, the electrically charged powder is delivered to the delivery mechanism, and the collected powder is retained on delivery mechanism based on electrostatic attraction between powder and delivery mechanism at operation 410. At operation 412, a pattern of collected powder is defined on the delivery mechanism. According to a non-limiting embodiment, an energy unit can generate energy (e.g., a laser beam), which can be directed at targeted area of the delivery mechanism to remove the electrical charge at the targeted area and define the pattern of powder.

At operation 414, the delivery mechanism including the collected powder is located near the electrically charged build. At operation 416, the powder is transferred from delivery mechanism to the build according to defined pattern of powder. As described herein the powder is transferred due to the electrostatic attraction between the powder and the build. At operation 418, the powder is sintered to the build, and the method ends at operation 420.

As described herein, various non-limiting embodiments provide an AMM system capable of improving the efficiency and precision at which AMM powder is deposited to a build. The AMM system includes an electrostatic powder deposition sub-system and a sintering sub-system. The electrostatic powder deposition sub-system facilitates the purposeful application of static electricity to the AM powder supply and to the AM build. At the electrostatic powder deposition sub-system, the powder is electrified with the opposite charge of the build. For example, a negative charge is applied to the powder, while a positive charge is applied to the build. The electrical charge difference between the powder and build is utilized to deliver a precise amount of the powder to targeted areas of the build, thereby improving the packing density of the powder as it adheres to the build.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An additive material manufacturing, AMM, system comprising:
a roller (104) configured to rotate about a center axis, the roller including a collecting surface (105) coated with a photosensitive material configured to retain an electrical charge having a first polarity; and
a powder dispenser (106) disposed above the roller (104), the powder dispenser (106) configured to deposit electrically charged powder having a second polarity to the collecting surface (105), the second polarity being opposite with respect to the first polarity,
wherein the roller (104) rotates adjacent to an electrically charged build having the second polarity such that an electrostatic attraction between the electrically charged powder and the electrically charged build forces the electrically charged powder to transfer from the collecting surface (105) to the electrically charged build.

2. The AMM system of claim 1, wherein the photosensitive material comprises at least one of selenium, amorphous silicon and cadmium sulfide, and wherein the electrically charged powder includes at least one of a metal material, a ceramic material, and a polymer material.

3. The AMM system of claim 1 or 2, further comprising a first power supply (110) in signal communication with the powder dispenser (106) and the roller (104), the first power supply (110) configured to deliver a first voltage having the first polarity to the powder dispenser (106) so as to induce the electrical charge on the powder, and to deliver a second voltage having the second polarity to the roller (104) so as to induce the electrical charge on the collecting surface (105).

4. The AMM system of claim 3, wherein the powder is electrically charged as it is dispensed from the powder dispenser (106), and wherein the dispensed electrically-charged powder is collected and retained on the collecting surface (105) based on an electrostatic attraction between the first charge of the electrically charged powder and the second charge of the collecting surface (105).

5. The AMM system of any preceding claim, further comprising an energy delivery unit (116) disposed adjacent the roller (104), the energy delivery unit (116) configured to generate energy that is delivered to the collecting surface (105),
wherein the energy impinges a targeted area of the collecting surface (105) to remove the second charge at the targeted area and define a pattern of powder on the collecting surface (105), and
wherein the roller (104) deposits the pattern of powder on to the electrically charged build as the roller (104) rotates and locates the electrically charged powder in proximity of the electrically charged build, and preferably further comprising a computer system configured to store a computer model of the build, and configured to control the energy delivery unit (116) so as to define the pattern of powder on the collecting surface (105).

6. The AMM system of any preceding claim, further comprising a heating unit (152) configured to apply heat to the electrically charged build, wherein the heat sinters the powder to the build.

7. An additive material manufacturing, AMM, system comprising:
a mechanical arm-based electrostatic powder deposition sub-system comprising:
a mechanical arm (204) configured to rotate and swing three-hundred and sixty degrees (360°) about a center axis or in full three-dimensional motion, the mechanical arm (204) including a first end coupled to a base (208) and an opposing second end coupled to a rotatable joint, the base (208) including a collecting surface (212) coated with an electrostatic or photosensitive material configured to retain an electrical charge having a first polarity; and
a powder dispenser (214) disposed above the mechanical arm (204), the powder dispenser (214) configured to deposit electrically charged powder having a second polarity to the collecting surface, the second polarity being opposite with respect to the first polarity,
wherein the collecting surface (212) is located proximate to an electrically charged build in response to rotating the mechanical arm (204), the electrically charged build having the second polarity such that an electrostatic attraction between the electrically charged powder and the electrically charged build forces the electrically charged powder to transfer from the collecting surface to the electrically charged build.

8. The AMM system of claim 7, wherein the photosensitive material comprises at least one of selenium, amorphous silicon and cadmium sulfide, and wherein the electrically charged powder includes at least one of a metal material, a ceramic material, and a polymer material.

9. The AMM system of claim 7 or 8, further comprising a first power supply (220) in signal communication with the powder dispenser (214) and the mechanical arm (204), the first power supply (220) configured to deliver a first voltage having the first polarity to the powder dispenser (214) so as to induce the electrical charge on the powder, and to deliver a second voltage having the second polarity to the mechanical arm (204) so as to induce the electrical charge on the collecting surface (212), and preferably wherein the powder is electrically charged as it is dispensed from the powder dispenser (214), and wherein the dispensed electrically powder is collected and retained on the collecting surface (212) based on an electrostatic attraction between the first charge of the electrically charged powder and the second charge of the collecting surface (212).

10. The AMM system of any of claims 7-9, further comprising an energy delivery unit (224) disposed adjacent the mechanical arm (204), the energy delivery unit configured to generate energy that is delivered to the collecting surface,
wherein the energy impinges a targeted area of the collecting surface (212) to remove the second charge at the targeted area and define a pattern of powder on the collecting surface (212), and
wherein the collecting surface (212) deposits the pattern of powder on to the electrically charged build as the mechanical arm (204) moves and locates the electrically charged powder in proximity of the electrically charged build, and preferably further comprising a computer system configured to store a computer model of the build, and configured to control the energy delivery unit (224) so as to define the pattern of powder on the collecting surface (212).

11. The AMM system of any of claims 7-10, further comprising a heating unit (252) configured to apply heat to the electrically charged build, wherein the heat sinters the powder to the build.

12. An additive material manufacturing, AMM, system comprising:
a stamp-based electrostatic powder deposition sub-system comprising:
a stamping press (304) including an arm (306) having an end coupled to a base (308), the base (308) including a collecting surface (312) coated with an electrostatic or photosensitive material configured to retain a first electrical charge;
a powder dispenser (314) configured to dispense powder;
a powder tray (315) configured to collect dispensed powder and apply a second electrical charge to the powder collected in the powder tray (315),
wherein the stamping press (304) is configured to press the base (308) against the electrically charged powder collected in the powder tray (315) such that the collecting surface (312) retains a portion of the electrically charged powder based on an electrostatic attraction between the electrically charged powder and the collecting surface (312), and
wherein the stamping press (304) is configured to press the base (308) against an electrically charged build such that the electrically charged powder is transferred from the collecting surface (312) to the build based on an electrostatic attraction between the electrically charged powder and a third electrical charge applied to the build.

13. The AMM system of claim 12, wherein the first electrical charge applied to the powder has a first polarity, the second electrical charge applied to the stamping press has a second polarity opposite the first polarity, and the third electrical charge applied to the build has the first charge, the third electrical charge having a voltage level that is greater than a voltage level of the first electrical charge, and preferably further comprising a first power supply (320) in signal communication with the powder tray (315) and the stamping press (304), the first power supply (320) configured to deliver a first voltage having the first polarity to the powder tray (315) so as to induce the first electrical charge on the powder, and to deliver a second voltage having the second polarity to the stamping press (304) so as to induce the electrical charge on the collecting surface (312).

14. The AMM system of claim 12 or 13, further comprising an energy delivery unit (324) configured to generate energy that is delivered to the collecting surface (312),
wherein the energy impinges a targeted area of the collecting surface (312) to remove the second charge at the targeted area and define a pattern of powder on the collecting surface (312), and
wherein the collecting surface deposits the pattern of powder on to the electrically charged build in response to pressing the contact surface against the electrically charged build, and preferably further comprising a computer system configured to store a computer model of the build, and configured to control the energy delivery unit (324) so as to define the pattern of powder on the collecting surface (312).

15. The AMM system of any of claims 12-14, further comprising a heating unit (352) configured to apply heat to the electrically charged build, wherein the heat sinters the powder to the build.
